# EUROPEAN PATENT APPLICATION

(11) **EP 1 906 197 A1**
(43) Date of publication of application: **02.04.2008**
(21) Application number: 06291531.9
(22) Date of filing: 27.09.2006
(51) Int. Cl.: G01S 1/00, G01S 5/14

(54) **System for providing augmentation data relevant to several different global navigation satellite systems**

(71) Applicant: ASTRIUM SAS, 75216 Paris Cedex 16 (FR)
(72) Inventor: Boutteau, Bertrand, 75015 Paris (FR); Ripple, Martin, 78100 St Germain en Laye (FR); Favin-Lévêque, Hugues, 78530 Buc (FR); Bertran, Xavier, 75008 Paris (FR); Bidaux, Ambroise, 92370 Chaville (FR)
(74) Representative: Hummel, Adam

(57) **Abstract**

System comprising a sensor segment, a multi-constellation data processing facility, a data broadcast segment and a receiver segment, where the sensor segment continuously transmits the received observables to the multi-constellation data processing facility, the multi-constellation data processing facility transfers the determined global augmentation data to the data broadcast segment, and the data broadcast segment delivers to the receiver segment the data produced by the multi-constellation data processing facility.

## Description

The invention relates to a Global Navigation Satellite System (GNSS) providing an augmentation service.

The GNSS comprises underlying satellite navigation systems supplemented with augmentation systems, which enhance the accuracy, integrity, availability and continuity of service of the underlying systems. These augmentations are satellite based augmentation systems, ground based augmentation systems, and receiver autonomous augmentation systems.

The Satellite Based Augmentation Systems (SBAS) of the prior art provide on a regional scale (typically a continent) the following main input to the users: additional pseudo-ranges (to geostationary satellites), integrity data, and satellite clock and position differential data. These inputs are delivered to the users over geostationary satellites.

One disadvantage of this type of system is that it is purely regional while the integrity data and the satellite clock/position differential data are potentially valid on the entire footprint of the augmented GNSS MEO (Medium Earth Orbit) satellites.

Another disadvantage is that the availability of the service is dependant on a free line of sight between the user and the geostationary satellites. In intermediate and northern latitude as well as in urban environment, this condition can degrade the service availability and continuity dramatically.

A further disadvantage of this technique is that the data stream broadcasting the augmentation data is not designed to minimize the data rate and thus does not allow an optimization of the link budget to the receiver.

Another disadvantage of this technique is that the augmentation data are determined (e.g. computed) based on range measurement collected by a limited set of ground stations typically 40 - mostly located within or close to the service area which is regional. This fact limits the accuracy of the determined differential data - especially at the hedge of the service area. In general the achieved accuracy is limited compared to an approach that would determine (e.g. compute) the satellite differential data (clock and position) by looking at the global optimum across all the satellites of all the monitored GNSS constellations observed by a set of reference receivers distributed around the world so as to serve an area covering all of the earth.

The Ground Based Augmentation systems (GBAS) of the prior art provide on a local scale (typically on a 100/200 km surrounding radius) Satellite pseudo-range differential data (code and phase correction) observed by a reference receiver located at the center of the local service area.

A disadvantage of this technique is that it is purely local and it would require a high number of reference stations to cover a wider area.

A further disadvantage of this technique is that the data stream delivering the augmentation data is not designed to minimize the data rate and thus does not allow an optimized link budget for the transmission to the receiver.

The Receiver Autonomous Augmentation system (RAAS) of the prior art that augments the service quality by autonomously detecting - within the receiver - the inconsistencies across the various range measurement performed on all the satellites in view. The position solution is then determined by considering only those satellites that have been deemed valid by this detection mechanism.

The main drawback of RAAS is that it requires a fairly high number of satellites in view to be efficient.

Another drawback is that it only augments the service integrity but in most cases it degrades the service accuracy compared to the other ground based art described above. RAAS can only work if the flying GNSS constellations are oversized and RAAS does not compensate for a temporary performance degradation of one satellite or the other.

It is an object of the invention to disclose an apparatus that is capable of providing a global GNSS augmentation service for all simultaneously operating GNSS constellations (e.g., Galileo, GPS, GLONASS) and space-based augmentation systems (e.g., WAAS, EGNOS, MSAS) that is available at all user locations.

The object is solved by apparatus according to Claims 1 to 8.

One advantage of the invention is that it is multi-constellation, i.e., it is applicable to all simultaneously flying satellites of any GNSS constellations (e.g., GPS, Galileo, GLONASS) and any satellite based augmentation systems constellation (e.g., EGNOS, WAAS, MSAS).

Another advantage of the invention is that the augmentation service delivered is available worldwide, i.e., the augmentation data are determined for any location around the world based on a worldwide distributed set of ground sensor stations.

Another advantage of the invention is that the augmentation data are made available on any location around the world based on a broadcast medium covering the entire earth.

Another advantage of the invention is that it delivers a high accurate service, i.e., the augmentation data are determined as the optimal solution among all the available measurements made on all satellites by a worldwide distributed set of ground sensor station.

Another advantage of the invention is that it is robust against interference and signal attenuation disturbing the broadcast of the augmentation data, i.e., the volume of the augmentation data broadcast is minimized to fit with very low data rate and thus very cheap and robust broadcast medium.

Another advantage of the invention is that it can be easily deployed onto a large set of receiver models from various manufacturers, i.e., the reception, decompressing and injection of the augmentation data in the navigation solution process is carried out within the receiver chip that supports already the navigation filter.

Fig. 1 shows an apparatus according to the invention.

In one embodiment, the apparatus according to the invention comprises a sensor segment, a multi-constellation data processing facility, a data broadcast segment, and a receiver segment.

Embodiments of these components are described next.

### THE SENSOR SEGMENT

The sensor segment comprises a set of reference receivers distributed around the world, continuously measuring the pseudo-range to any flying GNSS MEO or SBAS GEO satellite. The collected pseudo-range measurements are continuously transmitted as input to the multi-constellation data processing facility.

### The multi-constellation data processing facility

The multi-constellation data processing facility comprises hardware and software means for the determination (e.g. computation) of global augmentation data comprising ephemeris, time synchronization data, differential correction data and integrity data for all the GNSS satellites. The input to the multi-constellation data processing facility is the pseudo-range measurements collected from the sensor segment. Once determined, the global augmentation data are transferred as input to the data broadcast segment.

The multi-constellation data processing facility determines (e.g. computes) as a global optimum the ephemeris, the time synchronization data and the differential correction data applicable to all simultaneously flying GNSS satellites (including MEO constellation like GPS, GLONASS or Galileo and GEO SBAS system like WAAS, EGNOS or MSAS).

This determination (e.g. computation) defines a state vector comprising ephemeris and time synchronization data.
For any given state vector, the facility can predict what the set of pseudo range measurement (the observables) should be.
It is then possible to define a metric characterizing the distance between the set of predicted observable and the actually collected observables. In a possible embodiment, this metric could for instance be a weighted quadratic sum of the residuals.(i.e the difference between the predicted pseudo range and the real pseudo range collected by the Sensor Segment).

The solution of this determination problem will consist in finding the state vector that minimizes the distance between the predicted set of observables and the set of observables collected.

In one possible embodiment of this process, and given that the relationship between the observed pseudo-range measurements and the unknown state vector (ephemeris and time synchronization data) is not-linear, this process would be implemented by means of an extended Kalman filter.

As an alternative embodiment, the process would be implemented by means of an unscented Kalman filter, which is sometimes deemed more efficient when the relationship between the state vector and the observables is not linear.

According to the invention, the state vector is extended. This extended state vector reflects ephemeris and time synchronization parameters of all flying satellites from all constellations and not only the ephemeris and time parameter of a single GNSS constellation.

According to the invention, the observables comprising the pseudo-range measurements are extended. These extended observables considered as input apply to all flying satellites from all constellations and not only measurements from one single constellation.

The extended state vector and extended set of observables of the invention are all processed together in the same procedure, e.g., an algorithm. Typically, there are about 100 satellites * 50 stations.

One of the advantages is that the output solutions refer to a single system time and a single geodetic reference whereas solutions consisting in processing ranges from each constellation separately produce solutions referring to different system times and Geodetic references. This provides the advantage that the whole system integrated solution of the invention provides a high accuracy and robustness for positioning and timing high precision services.

### The data broadcast segments

The data broadcast segments deliver to the receiver segment, via RF means, the data produced by the multi-constellation data processing facility.

To maximize the robustness of the transmission, the entire design is focused on reducing by various means the volume of the data rate to be transmitted. This feature is referred as the low data rate transmission mode.

The data broadcast segments also deliver the global augmentation data in a conventional mode, known in prior art as Assisted GPS. This mode is used when the receiver segment is in the reach of a high data rate transmitting source (like Wifi, Wimax, UMTS, GPRS or GSM base stations) and should speed up receiver initialization and time to first fix.

In one embodiment of the low data rate of the invention, the data broadcast segment comprises the following components (or any subset of these components): a dynamic filter, a set of regional broadcasters, a set of regional filters, and an encoding layer.

### The Dynamic Filter

The dynamic filter reduces the volume of the global augmentation data taking into account the dynamic of the individual parameters to be broadcast as detailed in the possible embodiment hereafter.

In this proposed embodiment, the Global Augmentation Data generated by the Multi-constellation Data Processing Facility is composed of four classes of data: the ephemeredes, the time synchronization, the differential correction data and the integrity data.

In these data, the different model parameters are represented with different quantities, corresponding to different correlation characteristic times, broadcast with different periodicities. The basic principle of the dynamic filter is to broadcasts each navigation data quantity with a periodicity depending on its intrinsic characteristic variation time.

Typically, there are three characteristic times defined by the present embodiment: T1: the mission lifetime, T2=100 minutes: which is approximately the time of validity for an ephemeris, and T3 =30s, time of validity of differential correction.

As generically described in table 1 and 2 each parameter of the augmentation data can be split into three subset of bit. The first subset: Data1 is the constant term of the Data over the SV lifetime. The word: Data2 reflects the part of the Data that is anticipated to be constant over the next 100 minutes. And finally the third set of bit: Data3 is the part of Data which is likely to have a dynamic of less than 100 minutes and would therefore be refreshed at a higher periodicity e.g every 30s period.

**Table 1.**

| Prior Art | Data | | | | | N bits | |
|---|---|---|---|---|---|---|---|
| | α₁α₂···α_{*N*1}···α_{*N*1+*N*2+1}···α*_{N}* | | | | | | |
| Present Invention | Data1 | N1 bits | Data2 | N2 bits | Data3 | | N3 bits |
| | α₁α₂···α_{*N*1} | | α_{*N*1}···α_{*N*1+*N*2+1} | | α_{*N*1+*N*2+1}···α*_{N}* | | |

| | | | | | | | |
|---|---|---|---|---|---|---|---|
| α*ᵢ* = i_th bit of the parameter | | | | | | | |

**Table 2.**

| Prior Art | Eccentricity | | | | | N bits | |
|---|---|---|---|---|---|---|---|
| | α₁α₂···α_{*N*1}···α_{*N*1+*N*2+1}···α*_{N}* | | | | | | |
| Present Invention | Eccentricity1 | N1 bits | Eccentricity2 | N2 bits | Eccentricity3 | | N3 bits |
| | α₁α₂ ···α_{*N*1} | | α*_{N1}···*α_{*N*1+*N*2+1} | | α_{*N*1+*N*2+1}···α*_{N}* | | |

| | | | | | | | |
|---|---|---|---|---|---|---|---|
| α*ᵢ* = i_th bit of the parameter | | | | | | | |

So the global augmentation data at the output of the dynamic filter produces three main frames, the first one which contains all the Data1 words from all the parameters, the second one which contains all the Data2 words from all the parameters and the third one which contains all the Data3 words from all the parameters.

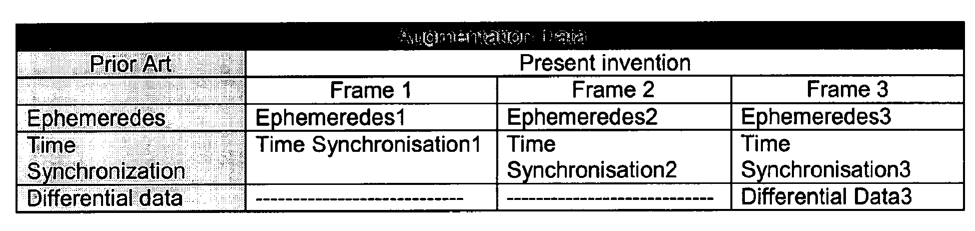

Each frame is broadcast according to its dynamic. In this case Frame 1 is stored in the receiver default configuration (e.g in a PROM), Frame 2 would be broadcast at a period coherent with time to first fix (e.g 5 minutes) and, Frame 3 is broadcast each 30s.
The numbers are only given for explanatory purposes. The invention is not restricted to these cases.

In another embodiment of the invention only the differences (or the double differences) between the values of two consecutive data batch is disseminated instead of the complete value. Additionally, the dynamic filter takes advantage of the correlation between the navigation parameters of the different GNSS satellites.

In a further embodiment of the invention, only failures or errors exceeding a defined threshold are corrected.

### Regional Broadcaster

The set of regional broadcasters is in charge of transmitting by RF means the augmentation data to the receiver segment.

In one embodiment of the invention, a regional broadcaster makes use of a transparent transponder embarked onboard a geostationary or a Medium Earth Orbit satellite.

In another embodiment of the invention, a regional broadcaster makes use of a regenerative payload embarked onboard a GNSS Medium Earth Orbit Satellite that multiplexes third party data stream, e.g., the regional augmentation data, to the navigation data stream like for instance the ERIS concept on Galileo.

In a further embodiment of the invention, a regional broadcaster makes use of terrestrial emitters like is done for the e-Loran system.

### Regional Filters

In one embodiment of the invention, a set of regional filters reduce further the volume of data to be emitted to the receiver segment by selecting for each regional broadcaster the subset of the global augmentation data applicable to the satellites that are visible to the user of that region.

In a further embodiment of the invention, a selection of the four or more satellites permitting a positioning solution anywhere in the zone can be performed among the satellites covering a zone, according to the quality of their signals (SISA), their elevation and the geometric configuration of the set. The parameters of the selected satellites can be broadcast with a higher periodicity than the other in order to reduce time to first fix in low data rate mode.

In another embodiment of the invention, the satellites are grouped by direction over the coverage zone (for example zenith, north, south, east, west) and the data transmission periodicity of satellites is increased for the direction groups that counts less satellites than the other group.

### Encoding Layer

In one embodiment of the invention, the encoding layer encrypts and further compresses the data stream using state of the art compression and encryption mechanism. The encryption is considered as a possible mean to ensure user access control in a commercial context.

### The Receiver Segment

In one embodiment of the invention, the receiver segment determines (e.g. computes) the user position in stand alone mode, i.e., with no augmentation data, the user position in the high data rate mode, and a high accurate user position in low data rate mode by decrypting, decompressing and applying the low data rate augmentation data to the pseudo-range measurements used as input to the positioning filter.

Furthermore, in another embodiment of the invention, to facilitate the deployment of the solution onto a large set of receiver model from different receiver manufacturers, it is part of the invention to integrate in a single chipset the position filter process with the decrypting, decompressing and processing of the low data rate augmentation data.

According to another embodiment of the invention, the chipset is able to switch between standalone mode, low data rate augmented mode and high data rate augmented mode or to mix the data acquisition between these modes according to signals availability (GNSS signals, low data rate and high data rate assistance) according to a defined order of priority.

In the standalone mode, the chipset typically behaves like standalone state of the art chipset. In the high data rate augmented mode, the positioning algorithm is the same as for the state of the art chipset, and the chipset additionally updates the long and medium term parameters. Further, in low data rate augmented mode, the augmentation data are decrypted, decompressed and interpreted before being injected into the position filter.

Arbitrary combinations of the described embodiments are also part of the invention.

## Claims

1. Sensor segment comprising a set of reference receivers where the reference receivers are distributed around the world and the reference receivers continuously measure the pseudo-range to any flying GNSS MEO or SBAS GEO satellite.

2. Multi-constellation data processing facility for determination of global augmentation data comprising means for determining augmentation data for all of the GNSS satellites.

3. Multi-constellation data processing facility according to claim 2 where the determined augmentation data comprises ephemeris data, time synchronization data, differential correction data and integrity data.

4. Multi-constellation data processing facility according to one of the claims 2 and 3 where a state vector that comprises the ephemeris data and the time synchronization data minimizes the residuals among all available observables.

5. Multi-constellation data processing facility according to claim 4 where the observables are pseudo-range measurements of all GNSS satellites.

6. Data broadcast segment comprising a dynamic filter for reducing the volume of the global augmentation data, a set of regional broadcasters for transmitting the augmentation data to the receiver segment, a set of regional filters for reducing the volume of data to be emitted to the receiver segment and an encoding layer for encrypting and compressing the data stream.

7. Receiver segment comprising a chipset where a position filter process with the decrypting, decompressing and processing of the low data rate augmentation data is integrated in the chipset.

8. System comprising
a sensor segment according to claim 1, a multi-constellation data processing facility according to one of the claims 2 to 5, a data broadcast segment according to claim 6, and a receiver segment according to claim 7, where the sensor segment continuously transmits the received observables to the multi-constellation data processing facility, the multi-constellation data processing facility transfers the determined global augmentation data to the data broadcast segment, and the data broadcast segment delivers to the receiver segment the data produced by the multi-constellation data processing facility.
